# EUROPÄISCHE PATENTSCHRIFT

(11) **EP 1 081 926 B1**
(45) Veröffentlichungstag und Bekanntmachung des Hinweises auf die Patenterteilung: **10.12.2008**
(21) Anmeldenummer: 00440224.4
(22) Anmeldetag: 04.08.2000
(51) Int. Cl.: H04M 3/42, H04M 3/51

(54) **Verfahren und Diensterechner zum Einbeziehen eines Übersetzers in ein Telefongespräch**
Method and service processor for engaging a translator in a telephonic conversation
Méthode et processeur de service pour intégrer un traducteur dans une conversation téléphonique

(30) Priorität: 01.09.1999 DE 19941529
(43) Veröffentlichungstag der Anmeldung: 07.03.2001
(73) Patentinhaber: Alcatel Lucent, 75008 Paris (FR)
(72) Erfinder: Hägebarth, Frank, 74366 Kirchheim (DE)
(74) Vertreter: Schmidt, Werner Karl

(56) Entgegenhaltungen:
- EP-A- 0 587 950
- EP-A- 0 601 710
- EP-A- 0 973 312
- WO-A-00/08875
- DE-A- 10 027 032
- US-A- 5 185 782
- HASSLER K W ET AL: "REVOLUTIONIZING DEFINITY CALL CENTERS IN THE 1990S" AT & T TECHNICAL JOURNAL, AMERICAN TELEPHONE AND TELEGRAPH CO. NEW YORK, US, Bd. 74, Nr. 4, 1. Juli 1995 (1995-07-01), Seiten 64-73, XP000517580 ISSN: 8756-2324
- "COMPUTERIZED CALL RETURN FEATURE" IBM TECHNICAL DISCLOSURE BULLETIN, IBM CORP. NEW YORK, US, Bd. 28, Nr. 11, April 1986 (1986-04), Seiten 4897-4901, XP000836268 ISSN: 0018-8689

## Beschreibung

Die vorliegende Erfindung betrifft ein Verfahren zum Einbeziehen eines Übersetzers in ein Telefongespräch zwischen einem Teilnehmer und einem Gesprächspartner. Dabei sprechen der Teilnehmer und der Gesprächspartner in unterschiedlichen Sprachen. Das Verfahren umfasst die nachfolgenden Schritte:
- Anwahl eines Diensterechners in einem Telekommunikations-Netzwerk;
- Anforderung von Übersetzungs-Parametern, insbesondere der Sprachen und des Sachgebiets des Telefongesprächs, durch den Diensterechner;
- Empfang der von dem Teilnehmer eingegebenen Parameter durch den Diensterechner;
- Abgleich der empfangenen Parameter mit Angaben über verfügbare Übersetzer, insbesondere mit den Sprachen und den Sachgebieten, in denen sie übersetzen, durch den Diensterechner;
- Auswahl eines Übersetzers aus den verfügbaren Übersetzern durch den Diensterechner in Abhängigkeit der eingegebenen Parameter; und
- Veranlassen des Aufbaus einer Konferenzschaltung zwischen dem Teilnehmer, dem Gesprächspartner und dem Übersetzer durch den Diensterechner.

Außerdem betrifft die Erfindung einen Diensterechner für ein Telekommunikations (TK)-Netzwerk zur Ausführung des Verfahrens.

Ein derartiges Verfahren und ein derartiger Diensterechner sind aus der EP 0 973 312 A1 bekannt. Eine andere Druckschrift, die EP 0 601 710 A2 bezieht sich im wesentlichen darauf, wie eine Verbindung zu einem Übersetzer vollautomatisch derart hergestellt werden kann, dass der Anrufer soweit wie möglich vom Aufbau einer Kommunikationsverbindung zu dem Übersetzer entlastet wird. Die der Erfindung zugrundeliegende Problematik wird in dieser Druckschrift nicht angesprochen.

In Zeiten zunehmender Globalisierung der Industrie, modernen, schnell und zuverlässig arbeitenden Telekommunikationssystemen und schneller und preiswerter Personentransportsysteme wachsen die Länder dieser Welt zunehmend zusammen. Wirtschaftliche oder private Kontakte über die eigenen Landesgrenzen hinweg sind heute keine Seltenheit mehr. In zunehmendem Maße gewinnen Kontakte über das Telefon an Bedeutung, da ein Telefongespräche eine schnelle und preiswerte Kontaktaufnahme zwischen einem Gesprächsteilnehmer und dessen Gesprächspartner erlaubt. In der Regel sprechen die ausländischen Gesprächspartner eine fremde Sprache. Selbst wenn der Teilnehmer Grundkenntnisse in der fremden Sprache hat, so bedarf es für eine flüssige und unmissverständliche Unterhaltung in der Regel der Zwischenschaltung eines Übersetzers.

Ein Übersetzer kann bspw. bei Bedarf im Rahmen einer Konferenzschaltung in ein bestehendes Telefongespräch zwischen dem Teilnehmer und dem Gesprächspartner integriert werden. Dazu wählt der Teilnehmer oder der Gesprächspartner die Rufnummer eines Übersetzers und integriert ihn in die Konferenzschaltung. Dies hört sich jedoch wesentlich leichter an als es in der Praxis tatsächlich ist. Dieses Verfahren setzt nämlich voraus, dass ein geeigneter Übersetzer zur Verfügung steht, der beide gewünschte Sprachen spricht und sich auch noch in dem Sachgebiet des Telefongesprächs auskennt. Zudem muß der geeignete Übersetzer momentan frei sein.

Ein Diensteanbieter, der einen solchen Übersetzungsdienst anbieten möchte, muss also eine entsprechend große Zahl an Übersetzern vorhalten. Zu Zeiten geringer Nachfrage nach einem übersetzungsdienst ist die Auslastung der verfügbaren Übersetzer relativ gering. Andererseits wird es in Spitzenzeiten sehr schwer, einen geeigneten freien Übersetzer zu erreichen, da die Anzahl der Übersetzer aus Wirtschaftlichkeitsgründen nicht auf die Lastspitzen ausgelegt wird. Ein Dienst, der nur sporadisch verfügbar ist, wird bei den Gesprächsteilnehmern kaum auf Akzeptanz stoßen.

Eine weitere Möglichkeit, auf die Dienste eines Übersetzers zuzugreifen, bietet eine automatische Übersetzung. Dabei wird die Sprache der beiden Gesprächsteilnehmer in Echtzeit durch ein Spracherkennungssystem, eine Übersetzungssoftware und Sprachsynthesesystem übersetzt.

Diese automatischen Übersetzungssysteme haben jedoch den Nachteil, dass sie noch nicht ausgereift sind. Bis derartige Systeme mit der notwendigen Geschwindigkeit und Zuverlässigkeit für eine Vielzahl unterschiedlicher Sprachen arbeiten, werden noch viele Jahre vergehen.

Deshalb ist es die Aufgabe der vorliegenden Erfindung ein Verfahren und einen Diensterechner der eingangs genannten Art dahingehend auszugestalten und weiterzubilden, dass im Falle einer automatischen Übersetzung eines Gesprächs zwischen einem Teilnehmer und einem Gesprächspartner bei einem Mangel an sprachlich oder fachlich geeigneten Übersetzern möglichst schnell und einfach zusätzliche Übersetzer vorgesehen werden können und die Auswahl eines sowohl sprachlich als auch fachlich geeigneten Übersetzers auf Grundlage einer möglichst aktuellen Liste der tatsächlich für eine Übersetzungstätigkeit zur Verfügung stehenden Übersetzer getroffen werden kann.

Zur Lösung dieser Aufgabe schlägt die Erfindung ausgehend von dem Verfahren der eingangs genannten Art ein Verfahren vor, das dadurch gekennzeichnet ist, dass die Anwahl des Diensterechners in dem Telekommunikations (TK)-Netzwerk durch den Teilnehmer erfolgt; und dass sich die Dienst tuenden Übersetzer bei Dienstantritt bei dem Diensterechner anmelden, dass die empfangenen Parameter durch den Diensterechner mit Angaben über die angemeldeten Übersetzer abgeglichen werden, dass aus den angemeldeten Übersetzern in Abhängigkeit der eingegebenen Parameter ein Übersetzer durch den Diensterechner ausgewählt wird, dass die empfangenen Parameter durch den Diensterechner bei Bedarf an zusätzlichen Übersetzungskapazitäten mit Angaben über die verfügbaren, nicht angemeldeten Übersetzer abgeglichen werden, dass aus den verfügbaren, nicht angemeldeten Übersetzern in Abhängigkeit der eingegebenen Parameter ein Übersetzer durch den Diensterechner ausgewählt wird und dass der ausgewählte Übersetzer aufgefordert wird, sich bei dem Diensterechner anzumelden.

Ein Diensterechner steuert bestimmte Funktionen eines Intelligenten Netzwerks (IN). Intelligente Netzwerke sind im Bereich der Telekommunikationstechnik seit längerer Zeit bekannt. Der Aufbau und die Funktion von Intelligenten Netzwerken ist bspw. in der WO 98/00955 beschrieben.

Um einen Übersetzungsdienst für ein Telefongespräch in Anspruch zu nehmen, muss erfindungsgemäß lediglich ein Diensterechner des Anbieters des Übersetzungsdienstes angewählt und diesem dann Übersetzungs-Parameter übermittelt werden. Die Übersetzer sitzen entweder zentral in einem Dienstgebäude des Dienstanbieters oder arbeiten dezentral z. B. als freie Mitarbeiter in ihrem Büro zu Hause. Die Auswahl eines momentan freien und fachlich qualifizierten Übersetzers wird dann automatisch von dem Diensterechner ausgeführt. Dazu werden die Übersetzungs-Parameter mit den Angaben über die verfügbaren Übersetzer verglichen. Die Angaben sind bspw. in einer Datenbank gespeichert, auf die der Diensterechner Zugriff hat.

Der ausgewählte Übersetzer wird dann ebenfalls von dem Diensterechner in das Telefongespräch zwischen dem Teilnehmer und seinem Gesprächspartner im Rahmen einer Konferenzschaltung einbezogen. Wenn dem Diensterechner die Rufnummer des Gesprächsteilnehmers bekannt ist, kann er die gesamte Konferenzschaltung zwischen Teilnehmer, Gesprächspartner und Übersetzer aufbauen. Alternativ ist jedoch auch denkbar, dass der Diensterechner den Übersetzer in ein bereits aufgebautes Telefongespräche zwischen dem Teilnehmer und dem Gesprächspartner mit einbezieht.

Bei dem erfindungsgemäßen Verfahren kann unter Ausnutzung der Fähigkeiten eines Diensterechners ein Übersetzer auf einfache, zuverlässige und preiswerte Weise in ein Telefongespräch einbezogen werden. Durch geeignete Maßnahmen wird die Wahrscheinlichkeit, auch in Spitzenzeiten einen Übersetzer zu erreichen entscheidend erhöht. Die Suche nach einem freien und fachlich qualifizierten Übersetzer wird von dem Diensterechner ausgeführt. Der Teilnehmer wird von dieser zeitaufwendigen Arbeit befreit. Dadurch kann die Akzeptanz eines telefonischen Übersetzungsdienstes entscheidend erhöht werden.

Der Teilnehmer und der Gesprächspartner nehmen beide gleichberechtigt an dem Telefongespräch teil. Die unterschiedlichen Bezeichnungen für die Personen, die an dem Telefongespräch teilnehmen wurden gewählt, um die Person, die den Übersetzungsdienst anfordert und die Übersetzungs-Parameter eingibt (Teilnehmer), von der Person zu unterscheiden, die lediglich an dem Telefongespräch teilnimmt (Gesprächspartner). Selbstverständlich ist das erfindungsgemäße Verfahren auch für Telefongespräche zwischen einem Teilnehmer und mehreren Gesprächspartnern anwendbar, die mit einer Konferenzschaltung miteinander verbunden sind.

Durch den Diensterechner wird anhand der Angaben über die verfügbaren Übersetzer von Zeit zu Zeit ein Dienstplan erstellt. Die empfangenen Parameter werden durch den Diensterechner mit Angaben über die laut Dienstplan Dienst tuenden Übersetzer abgeglichen und aus den laut Dienstplan Dienst tuenden Übersetzern wird in Abhängigkeit der eingegebenen Parameter ein Übersetzer durch den Diensterechner ausgewählt. Der Dienstplan wird den verfügbaren Übersetzern nach seiner Erstellung übermittelt. Dadurch können die Übersetzer langfristig planen. Zur Erstellung des Dienstplans können auch bestimmte Vorlieben der Übersetzer, z. B. bevorzugte Arbeitszeiten, Urlaubszeiten, etc. berücksichtigt werden. Der Diensterechner versucht dann aus den laut Dienstplan Dienst tuenden Übersetzern einen den Übersetzungs-Parametern entsprechenden freien Übersetzer zu finden und ihn in das Telefongespräch einzubeziehen.

Die laut Dienstplan Dienst tuenden Übersetzer melden sich bei Dienstantritt bei dem Diensterechner an. Die empfangenen Parameter werden durch den Diensterechner mit Angaben über die angemeldeten Übersetzer abgeglichen und aus den angemeldeten Übersetzern wird in Abhängigkeit der eingegebenen Parameter ein Übersetzer durch den Diensterechner ausgewählt. Ebenso melden sich die Übersetzer nach Ende ihrer Dienstzeit wieder bei dem Diensterechner ab. So ist der Diensterechner stets im Bilde, welche Übersetzer momentan tatsächlich erreichbar sind und für Übersetzungen herangezogen werden können. Der Diensterechner kann die Auslastung der einzelnen Übersetzer überwachen und bei einer schwachen Auslastung bestimmter Übersetzer diese veranlassen, sich von dem Diensterechner abzumelden, da ihre Übersetzungsdienste zur Zeit nicht benötigt werden. Dadurch können erhebliche Kosten eingespart werden, der Übersetzungsdienst kann kostengünstig angeboten werden und die Akzeptanz des telefonischen Übersetzungsdienstes steigt weiter.

Ebenso werden die empfangenen Übersetzungs-Parameter durch den Diensterechner bei Bedarf an zusätzlichen Übersetzungskapazitäten mit Angaben über die verfügbaren, nicht angemeldeten Übersetzer abgeglichen. Aus den verfügbaren, nicht angemeldeten Übersetzern wird in Abhängigkeit der eingegebenen Parameter ein Übersetzer durch den Diensterechner ausgewählt, und der ausgewählte Übersetzer wird aufgefordert, sich bei dem Diensterechner anzumelden. Auf diese Weise können in Spitzenzeiten die Übersetzungskapazitäten des Übersetzungsdienstes erhöht werden, um in Spitzenzeiten lange Wartezeiten der Teilnehmer, die einen Übersetzungsdienst anfordern, zu vermeiden.

Die Übersetzungs-Parameter werden gemäß einer vorteilhaften Weiterbildung der Erfindung in einem Dialog mit einem Sprachcomputer des Diensterechners eingegeben. Vorzugsweise werden die Übersetzungs-Parameter aus einem Menü mittels eines mehrfrequenten Wahlverfahrens (MFV) oder sprachgesteuert ausgewählt.

Gemäß einer anderen vorteilhaften Weiterbildung der vorliegenden Erfindung wird vorgeschlagen, dass, falls der Übersetzungsdienst zur Zeit nicht ausgeführt werden kann, nach dem Abgleich der empfangenen Parameter mit den Angaben über die verfügbare Übersetzer ein Zeitpunkt abgeschätzt wird, an dem der gewünschte Übersetzungsdienst wahrscheinlich erfüllt werden kann, dass dem Teilnehmer der geschätzte Zeitpunkt mitgeteilt wird, dass der Diensterechner den Aufbau einer Konferenzschaltung zwischen dem Teilnehmer, dem Gesprächspartner und dem Übersetzer veranlasst, sobald der Übersetzungsdienst ausgeführt werden kann. Für den Teilnehmer ist es einfacher, Wartezeiten zu ertragen, wenn für ihn absehbar ist, wann er den angeforderten Übersetzungsdienst bekommt. Selbst Überkapazitäten können so aufgefangen werden.

Es ist auch denkbar, dass Übersetzungsdienste im Voraus gebucht werden können und der Diensterechner zu der vereinbarten Zeit den Aufbau einer Konferenzschaltung zwischen dem Teilnehmer, den angegebenen Gesprächsteilnehmern und dem Übersetzer veranlasst. Die im Voraus gebuchten Übersetzungsdienste können bei der Erstellung des Dienstplans berücksichtigt werden.

Gemäß einer weiteren bevorzugten Ausführungsform der vorliegenden Erfindung wird vorgeschlagen, dass die Rufnummer des Teilnehmers durch den Diensterechner ermittelt wird und die Inanspruchnahme des Übersetzungsdienstes über die Telefonrechnung des Teilnehmers abgerechnet wird.

Als weitere Lösung der Aufgabe der Erfindung schlägt die Erfindung ausgehend von dem Diensterechner der eingangs genannten Art vor, dass der Diensterechner Mittel zum Ausführen der Schritte nach einem der Ansprüche 1 bis 5 aufweist.

Gemäß einer vorteilhaften Weiterbildung der vorliegenden Erfindung wird vorgeschlagen, dass die Angaben über die verfügbaren Übersetzer in einer Datenbank gespeichert sind, auf die der Diensterechner Zugriff hat.

Ein bevorzugtes Ausführungsbeispiel der vorliegenden Erfindung wird im Folgenden anhand der Zeichnungen näher erläutert. Es zeigt:

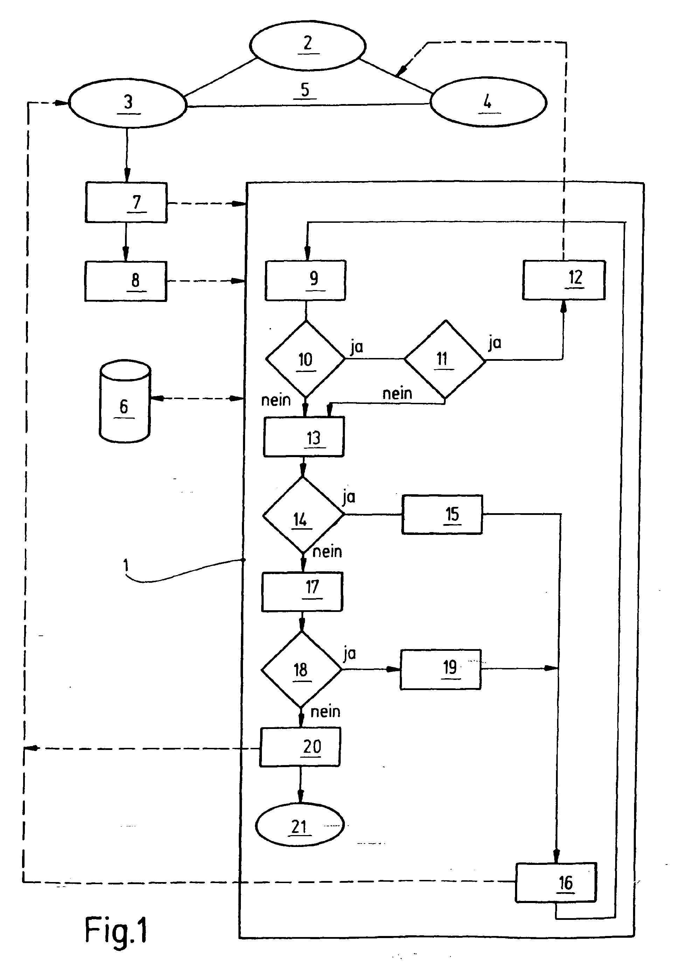

- Fig. 1: ein Ablaufdiagramm des erfindungsgemäßen Verfahrens gemäß einer bevorzugten Ausführungsform.

In Fig. 1 ist ein Diensterechner in einem Telekommunikations (TK)-Netzwerk symbolisch dargestellt und mit dem Bezugszeichen 1 bezeichnet. Der Diensterechner 1 ist erfindungsgemäß Teil eines Übersetzungsdienstes und wird dazu herangezogen, einen Übersetzer 2 in ein Telefongespräch zwischen einem Teilnehmer 3 und einem Gesprächspartner 4 einzubeziehen, wobei der Teilnehmer 3 und der Gesprächspartner 4 in unterschiedlichen Sprachen sprechen. Dazu wählt der Diensterechner 1 zunächst einen geeigneten Übersetzer 2 aus und veranlaßt dann den Aufbau einer Konferenzschaltung 5 zwischen dem Teilnehmer 3, dem Gesprächspartner 4 und dem Übersetzer 2. Selbstverständlich können an der Konferenzschaltung 5 auch mehrere Gesprächspartner 4 teilnehmen.

Dem Übersetzungsdienst steht eine bestimmte Anzahl von Übersetzern 2 zur Verfügung. Diese decken vorzugsweise möglichst viele Sprachen und Sachgebiete ab. Von Zeit zu Zeit erstellt der Diensterechner 1 einen Dienstplan, auf dem einer bestimmten Anzahl von verfügbaren Übersetzern 3 Dienstzeiten zugeteilt werden. Wenn die Übersetzer 3 ihren Dienst dann antreten, melden sie sich bei dem Diensterechner 1 an und nach Dienstschluß wieder ab. Dadurch ist der Diensterechner 1 stets im Bilde über die momentan angemeldeten Übersetzer 3.

In einer Datenbank 6 sind Angaben über alle verfügbaren Übersetzer 3 gespeichert. Die Angaben umfassen insbesondere die Sprachen und die Sachgebiete, in denen die Übersetzer 3 arbeiten. Darüber hinaus sind in der Datenbank 6 der Dienstplan mit den laut Dienstplan Dienst tuenden Übersetzern 3 und die momentan angemeldeten Übersetzer 3 gespeichert. Der Diensterechner 1 kann auf die in der Datenbank 6 gespeicherten Daten zugreifen.

Das erfindungsgemäße Verfahren beginnt in Block 7 damit, dass der Teilnehmer 3 den Diensterechner 1 anwählt und die Inanspruchnahme des Übersetzungsdienstes beantragt. Daraufhin fordert der Diensterechner 1 Übersetzungs-Parameter an. Die Übersetzungsparameter umfassen insbesondere die Sprachen und des Sachgebiet des Telefongesprächs. Der Teilnehmer 3 gibt in Block 8 die Übersetzungs-Parameter ein. Die Parameter werden bspw. in einem Dialog mit einem Sprachcomputer (nicht dargestellt) des Diensterechners 1 mittels eines Multifrequenz-Wahlverfahrens (MFV) oder sprachgesteuert eingegeben. Der Diensterechner 1 empfängt die von dem Teilnehmer 3 eingegebenen Parameter.

Dann führt der Diensterechner 1 in Block 9 einen Abgleich der Übersetzungs-Parameter mit den in der Datenbank 6 gespeicherten Angaben über die momentan angemeldeten Übersetzer 3 durch. Dabei wird überprüft, ob einer der angemeldeten Übersetzer 3 den Übersetzungs-Parametern entspricht, insbesondere ob er in den geforderten Sprachen und auf dem geforderten Sachgebiet arbeitet. In einem nachfolgenden Abfrageblock 10 wird überprüft, ob ein geeigneter Übersetzer 3 gefunden wurde. Falls ja, wird in Abfrageblock 11 überprüft, ob dieser Übersetzer auch frei ist. Falls er frei ist, veranlasst der Diensterechner 1 in Block 12 den Aufbau der Konferenzschaltung 5 zwischen dem Teilnehmer 3, dem Gesprächspartner 4 und dem ausgewählten Übersetzer 2. Der Aufbau der Konferenzschaltung 5 erfolgt automatisch durch den Diensterechner 1. Sobald der Übersetzer 2 oder der Teilnehmer 3 auflegt, wird die gesamte Konferenzschaltung 5 beendet.

Falls in Block 9 kein geeigneter Übersetzer 3 gefunden wurde oder falls der gefundene, geeignete Übersetzer 3 nicht frei ist, wird von den Abfrageblöcken 10, 11 zu Block 13 verzweigt. Dort wird ein Abgleich der Übersetzungs-Parameter mit den in der Datenbank 6 gespeicherten Angaben über die laut Dienstplan Dienst tuenden, aber nicht angemeldeten Übersetzer 3 durchgeführt. Dabei wird überprüft, ob einer der laut Dienstplan Dienst tuenden, aber nicht angemeldeten Übersetzer 3 den Übersetzungs-Parametern entspricht, insbesondere ob er in den geforderten Sprachen und auf dem geforderten Sachgebiet arbeitet. In einem nachfolgenden Abfrageblock 14 wird überprüft, ob ein entsprechender Übersetzer 3 gefunden wurde. Falls ja, wird der Übersetzer 3 in Abfrageblock 15 aufgefordert, sich bei dem Diensterechner 1 anzumelden. Anschließend wird dem Teilnehmer 3 in Block 16 die geschätzte Wartezeit mitgeteilt, bis der beantragte Übersetzungsdienst voraussichtlich erbracht werden kann. Bei der Ermittlung der voraussichtlichen Wartezeit können Angaben des in Block 15 aufgeforderten Übersetzers 3, bspw. wann er sich beim Diensterechner 1 anmelden kann, berücksichtigt werden. Dann verzweigt das Verfahren wieder zu Block 9.

Falls in Block 13 kein entsprechender Übersetzer 3 gefunden wurde, wird von dem Abfrageblock 14 zu Block 17 verzweigt. Dort wird ein Abgleich der Übersetzungs-Parameter mit den in der Datenbank 6 gespeicherten Angaben über die verfügbaren aber laut Dienstplan nicht Dienst tuenden und nicht angemeldeten Übersetzer 3 durchgeführt. Dabei wird überprüft, ob einer der verfügbaren, aber laut Dienstplan nicht Dienst tuenden und nicht angemeldeten Übersetzer 3 den Übersetzungs-Parametern entspricht, insbesondere ob er in den geforderten Sprachen und auf dem geforderten Sachgebiet arbeitet. In einem nachfolgenden Abfrageblock 18 wird überprüft, ob ein entsprechender Übersetzer 3 gefunden wurde. Falls ja, wird der Übersetzer 3 in Abfrageblock 19 aufgefordert, sich bei dem Diensterechner 1 anzumelden. Anschließend wird dem Teilnehmer 3 in Block 16 die geschätzte Wartezeit mitgeteilt, bis der beantragte Übersetzungsdienst voraussichtlich erbracht werden kann, und dann verzweigt das Verfahren wieder zu Block 9.

Falls in Block 17 auch kein entsprechender Übersetzer 3 gefunden wurde, wird dem Teilnehmer 3 in Block 20 mitgeteilt, dass der beantragte Übersetzungsdienst nicht erbracht werden kann, und das Verfahren wird in Block 21 beendet. Der beantragte Übersetzungsdienst kann bspw. dann nicht erbracht werden, wenn keine Übersetzer 3 mit den gewünschten Sprachen und/oder dem gewünschten Sachgebiet verfügbar sind.

Die Rufnummer des Teilnehmers 3 wird durch den Diensterechner 1 ermittelt. In Abhängigkeit von einem Tarif (Sprache, Uhrzeit, Sachgebiet) und von der Dauer der Inanspruchnahme des Übersetzungsdienstes wird von dem Diensterechner 1 eine Gebühr berechnet. Diese Gebühr wird dann über die Telefonrechnung des Teilnehmers 3 abgerechnet.

Durch den Diensterechner 1 können auch die Arbeitszeiten der Übersetzer 3 überwacht und aufgezeichnet werden. So kann zwischen Wartezeiten (laut Dienstplan eingeteilter und angemeldeter Übersetzer 3 wartet auf Übersetzungen), Arbeitszeiten (laut Dienstplan eingeteilter und angemeldeter Übersetzer 3 übersetzt) und Überstunden des Übersetzers 3 (laut Dienstplan nicht eingeteilter Übersetzer 3 ist angemeldet und wartet oder arbeitet) unterschieden werden und die Dienstplan-Einhaltung der Übersetzer 3 überwacht werden. Mittels dieser und anderer Daten kann der Diensteanbieter die Vergütung der Übersetzer 3 berechnen.

## Patentansprüche

1. Verfahren zum Einbeziehen eines Übersetzers (2) in ein Telefongespräch zwischen einem Teilnehmer (3) und einem Gesprächspartner (4), wobei der Teilnehmer (3) und der Gesprächspartner (4) in unterschiedlichen Sprachen sprechen, umfassend die nachfolgenden Schritte:
- Anwahl eines Diensterechners (1) in einem Telekommunikations-Netzwerk;
- Anforderung von Übersetzungs-Parametern, insbesondere der Sprachen und des Sachgebiets des Telefongesprächs, durch den Diensterechner (1);
- Empfang der von dem Teilnehmer (3) eingegebenen Parameter durch den Diensterechner (1);
- Abgleich der empfangenen Parameter mit Angaben über verfügbare Übersetzer (2), insbesondere mit den Sprachen und den Sachgebieten, in denen sie übersetzen, durch den Diensterechner (1);
- Auswahl eines Übersetzers (2) aus den verfügbaren Übersetzern (2) durch den Diensterechner (1) in Abhängigkeit der eingegebenen Parameter; und
- Veranlassen des Aufbaus einer Konferenzschaltung (5) zwischen dem Teilnehmer (3), dem Gesprächspartner (4) und dem Übersetzer (2) durch den Diensterechner (1)
**dadurch gekennzeichnet, dass** die Anwahl des Diensterechners (1) in dem Telekommunikations-Netzwerk durch den Teilnehmer (3) erfolgt; und dass sich die Dienst tuenden Übersetzer (2) bei Dienstantritt bei dem Diensterechner (1) anmelden, dass die empfangenen Parameter durch den Diensterechner (1) mit Angaben über die angemeldeten Übersetzer (2) abgeglichen werden, dass aus den angemeldeten Übersetzern (2) in Abhängigkeit der eingegebenen Parameter ein Übersetzer (2) durch den Diensterechner (1) ausgewählt wird, dass die empfangenen Parameter durch den Diensterechner (1) bei Bedarf an zusätzlichen Übersetzungskapazitäten mit Angaben über die verfügbaren, nicht angemeldeten Übersetzer (2) abgeglichen werden, dass aus den verfügbaren, nicht angemeldeten Übersetzern (2) in Abhängigkeit der eingegebenen Parameter ein Übersetzer (2) durch den Diensterechner (1) ausgewählt wird und dass der ausgewählte Übersetzer (2) aufgefordert wird, sich bei dem Diensterechner (1) anzumelden.

2. Verfahren nach Anspruch 1, **dadurch gekennzeichnet, dass** die Übersetzungs-Parameter in einem Dialog mit einem Sprachcomputer des Diensterechners (1) eingegeben werden.

3. Verfahren nach Anspruch 2, **dadurch gekennzeichnet, dass** die Übersetzungs-Parameter aus einem Menü mittels eines mehrfrequenten Wahlverfahrens oder sprachgesteuert ausgewählt werden.

4. Verfahren nach einem der Ansprüche 1 bis 3, **dadurch gekennzeichnet, dass**, falls der Übersetzungsdienst zur Zeit nicht ausgeführt werden kann, nach dem Abgleich der empfangenen Parameter mit den Angaben über die verfügbare Übersetzer (2) ein Zeitpunkt abgeschätzt wird, an dem der gewünschte Übersetzungsdienst wahrscheinlich erfüllt werden kann, dass dem Teilnehmer (3) der geschätzte Zeitpunkt mitgeteilt wird, dass der Diensterechner (1) den Aufbau einer Konferenzschaltung (5) zwischen dem Teilnehmer (3), dem Gesprächspartner (4) und dem Übersetzer (2) veranlasst, sobald der Übersetzungsdienst ausgeführt werden kann.

5. Verfahren nach einem der Ansprüche 1 bis 4, **dadurch gekennzeichnet, dass** die Rufnummer des Teilnehmers (3) durch den Diensterechner (1) ermittelt wird und die Inanspruchnahme des Übersetzungsdienstes über die Telefonrechnung des Teilnehmers (3) abgerechnet wird.

6. Diensterechner (1) für ein Telekommunikations-Netzwerk zum Einbeziehen eines Übersetzers (2) in ein Telefongespräch, zwischen einem Teilnehmer (3) und einem Gesprächspartner (4), wobei der Teilnehmer (3) und der Gesprächspartner (4) in unterschiedlichen Sprachen sprechen, **dadurch gekennzeichnet, dass** der Diensterechner (1) Mittel zum Ausführen der Schritte nach einem der vorangehenden Ansprüche aufweist.

7. Diensterechner (1) nach Anspruch 6, **dadurch gekennzeichnet, dass** die Angaben über die verfügbaren Übersetzer (2) in einer Datenbank (6) gespeichert sind, auf die der Diensterechner (1) Zugriff hat.

## Claims

1. A method for the inclusion of a Translator (2) in a telephone conversation between a Subscriber (3) and a Conversational Partner (4), wherein the Subscriber (3) and the Conversational Partner (4) are speaking in different languages, comprising the following steps:
- Selection of a Server (1) in a telecommunications network;
- Request of translation parameters, in particular of the languages and of the subject area of the telephone conversation, via the Server (1);
- Reception of the parameters input by the Subscriber (3) via the Server (1);
- Comparison of the received parameters with information about available translators (2), in particular with the languages and the subject areas, into which they translate, via the Server (1);
- Selection of a translator (2) from the available translators (2) via the Server (1) in dependency on the input parameters; and
- Causing the establishment of a conference switching (5) between the Subscriber (3), the Conversational Partner (4) and the Translator (2) via the Server (1).
**characterized in that** the selection of the Server takes place (1) in the telecommunications network by the Subscriber; and that the Translators (2) who are on duty log on at the Server (1) upon going on duty, that the received parameters are compared to information about the logged on Translators (2) via the Server (1), that one Translator (2) is selected from the logged on Translators (2) in dependency on the input parameters via the Server (1), that the received parameters are compared if necessary to information about available Translators (2) who are not logged on via the Server (1), that one Translator (2) is selected from the available Translators (2) who are not logged on in dependency on the input parameters and that the selected Translator (2) is prompted to log on to the Server (1).

2. The method according to Claim 1, **characterized in that** the translation parameters are input in a dialog with a language computer of the Server (1).

3. The method according to Claim 2, **characterized in that** the translation parameters are selected from a menu by means of a multi-frequency dialing process or in a voice-operated manner.

4. The method according to any one of Claims 1 through 3, **characterized in that,** in case the translation service cannot currently be carried out, after the comparison of the received parameters with the information about the available Translators (2) a time is estimated at which the desired translation service can probably be fulfilled, that the Subscriber (3) of the estimated time is informed that the Server (1) is establishing Conference Switching (5) between the Subscriber (3), the Conversational Partner (4) and the Translator (2), as soon as the translation service can be carried out.

5. The method according to any one of Claims 1 through 4, **characterized in that** the call number of the Subscriber (3) is determined via the Server (1) and the utilization of the translation service is invoiced via the telephone bill of the Subscriber (3).

6. A Server (1) for a telecommunications network for the inclusion of a Translator (2) in a telephone conversation between a Subscriber (3) and a Conversational Partner (4), wherein the Subscriber (3) and the Conversational Partner (4) are speaking in different languages, **characterized in that** the Server (1) exhibits means for the carrying out of the steps in accordance with any one of the preceding claims.

7. The Server (1) according to Claim 6, **characterized in that** the information about the available Translators (2) is stored in a database to which the Server (1) has access.

## Revendications

1. Procédé permettant d'inclure un traducteur (2) dans une conversation téléphonique entre un abonné (3) et un interlocuteur (4), l'abonné (3) et l'interlocuteur (4) s'exprimant dans des langues différentes, comprenant les étapes suivantes :
- la sélection d'un serveur (1) dans un réseau de télécommunication ;
- la demande par le serveur (1) de paramètres de traduction, en particulier des langues et du domaine de la conversation téléphonique ;
- la réception par le serveur (1) des paramètres entrés par l'abonné (3) ;
- l'ajustement par le serveur (1) des paramètres reçus avec les données sur les traducteurs (2) disponibles, en particulier avec les langues et les domaines, dans lesquels ils traduisent ;
- le choix par le serveur (1) d'un traducteur (2) parmi les traducteurs (2) disponibles en fonction des paramètres entrés ; et
- faire procéder par le serveur (1) à la constitution d'un pont de conférence (5) entre l'abonné (3), l'interlocuteur (4) et le traducteur (2)
**caractérisé en ce que** la sélection du serveur (1) dans le réseau de télécommunication est effectué par l'abonné (3) ; et **en ce que** les traducteurs (2) effectuant la prestation de service se présentent au serveur (1) lors du début du service, les paramètres reçus sont ajustés par le serveur (1) avec les données sur les traducteurs (2) faisant l'objet d'une présentation, un traducteur (2) est choisi par le serveur (1) parmi les traducteurs (2) faisant l'objet d'une présentation en fonction des paramètres entrés, les paramètres reçus sont ajustés par le serveur (1) avec les données sur les traducteurs (2) disponibles, ne faisant pas l'objet d'une présentation, en cas de besoin de capacités de traduction supplémentaires, un traducteur (2) est choisi par le serveur (1) parmi les traducteurs disponibles, ne faisant pas l'objet d'une présentation, en fonction des paramètres entrés et **en ce que** le traducteur (2) choisi est prié de se présenter au serveur (1).

2. Procédé selon la revendication 1, **caractérisé en ce que** les paramètres de traduction sont entrés dans un dialogue avec un ordinateur vocal du serveur (1).

3. Procédé selon la revendication 2, **caractérisé en ce que** les paramètres de traduction sont choisis depuis un menu au moyen d'un procédé de sélection multifréquence ou commandé par la voix.

4. Procédé selon l'une quelconque des revendications 1 à 3, **caractérisé en ce que,** si le service de traduction ne peut pas être réalisé en ce moment, après l'ajustement des paramètres reçus avec les données sur les traducteurs (2) disponibles, on estime un moment auquel le service de traduction souhaité peut probablement être réalisé, le moment estimé est communiqué à l'abonné (3), le serveur (1) fait procéder à la constitution d'un pont de conférence (5) entre l'abonné (3), l'interlocuteur (4) et le traducteur (2), dès que le service de traduction peut être réalisé.

5. Procédé selon l'une quelconque des revendications 1 à 4, **caractérisé en ce que** le numéro d'appel de l'abonné (3) est détecté par le serveur (1) et le recours au service de traduction est imputé sur la facture téléphonique de l'abonné (3).

6. Serveur (1) pour un réseau de télécommunication permettant d'inclure un traducteur (2) dans une conversation téléphonique, entre un abonné (3) et un interlocuteur (4), l'abonné (3) et l'Interlocuteur (4) s'exprimant dans des langues différentes, **caractérisé en ce que** le serveur (1) présente des moyens permettant de réaliser les étapes selon l'une quelconque des revendications précédentes.

7. Serveur (1) selon la revendication 6, **caractérisé en ce que** les données sur les traducteurs (2) disponibles sont stockées dans une base de données (6), à laquelle le serveur (1) a accès.
